(19) Europäisches Patentamt
European Patent Office
Office européen des brevets

(11) Veröffentlichungsnummer : **0 332 996 B1**

(12) # EUROPÄISCHE PATENTSCHRIFT

(45) Veröffentlichungstag der Patentschrift : **20.05.92 Patentblatt 92/21**

(51) Int. Cl.$^5$ : **C08L 27/06,** // (C08L27/06, 69:00)

(21) Anmeldenummer : **89103977.8**

(22) Anmeldetag : **07.03.89**

(54) **Thermoplastische Formmassen auf Basis von Mischungen aus Vinylchloridpolymerisaten und Blockcopolymeren auf Basis cyclischerCarbonate und Lactone.**

(30) Priorität : **17.03.88 DE 3808842**

(43) Veröffentlichungstag der Anmeldung : **20.09.89 Patentblatt 89/38**

(45) Bekanntmachung des Hinweises auf die Patenterteilung : **20.05.92 Patentblatt 92/21**

(84) Benannte Vertragsstaaten : **DE FR GB IT**

(56) Entgegenhaltungen :
**EP-A- 0 118 706**
**US-A- 3 557 252**

(73) Patentinhaber : **BAYER AG**
**W-5090 Leverkusen 1 Bayerwerk (DE)**

(72) Erfinder : **Eichenauer, Herbert, Dr.**
**Gustav-Heinemann-Strasse 3**
**W-4047 Dormagen 1 (DE)**
Erfinder : **Leitz, Edgar, Dr.**
**Goethestrasse 63**
**W-4047 Dormagen 1 (DE)**
Erfinder : **Ott, Karl-Heinz, Dr.**
**Paul-Klee-Strasse 54**
**W-5090 Leverkusen (DE)**
Erfinder : **Meier, Lothar, Dr.**
**Buchenstrasse 31b**
**W-4322 Sprockhoevel 2 (DE)**
Erfinder : **Gärtner, Maria, Dipl.-Ing.**
**Auf der Höhe 82**
**W-5060 Bergisch Gladbach 1 (DE)**

**EP 0 332 996 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Vinylchloridpolymerisate (insbesondere Polyvinylchlorid) stellen weit verbreitete Rohstoffe zur Herstellung verschiedenster Kunststoffartikel dar; durch Kombination der Vinylchloridpolymerisate mit anderen Stoffen läßt sich bekannterweise das charakteristische Eigenschaftsprofil der Vinylchloridpolymerisate in weiten Bereichen variieren bzw. modifizieren: Während sich z.B. un- bzw. gering modifiziertes Polyvinylchlorid (sogenanntes "Hart-PVC") insbesondere zur Herstellung von Formkörpern eignet, die ein mittleres Verarbeitungsverhalten, mittlere Wärmeformbeständigkeit bei mäßiger Zähigkeit und relativ niedriger Flexibilität aufweisen, lassen sich durch Weichmacher mit niedrigen bzw. mittleren Molekulargewichten Kunststoffartikel herstellen ("Weich-PVC"), die bei Gebrauchstemperaturen hohe Flexibilität und Elastizität besitzen; geeignete Weichmacher sind z.B. Phthalate, Epoxidverbindungen, aliphatische Diester, Phosphate, Polyester mit Molekulargewichten bis etwa 3000, Trimellitate, Citrate oder bestimmte aliphatische, gegebenenfalls chlorierte, Kohlenwasserstoffe; diese Weichmacher sind bekannt (vgl. "Encyclopedia of PVC", Mariel Dekker, INC, New York, 1976). Mischungen aus sogenannten polymeren Weichmachern (Polymere mit höheren Molekulargewichten) mit Vinylchloridpolymerisaten erlauben außerdem die Herstellung von "Weich-PVC"-Formkörpern mit verbesserten mechanischen Eigenschaften (z.B. verbesserte Abriebfestigkeit, Elastizität, Lösungsmittelbeständigkeit und Flammfestigkeit); bekannte Polymer-Weichmacher sind z.B. teilvernetzte Butadien-Acrylnitril-Copolymerisate (z.B. mit ca. 29 % Acrylnitril, Mooney-Viskositäten (ML 4, 100°C, DIN 53 523), von 60 bis 100) vgl. EP 5 736, bestimmte Polyurethane (vgl. DE-OS 1 193 241) sowie spezielle, in organischen Lösungsmitteln lösliche Ethylen-Vinylacetat-Copolymerisate (vgl. EP 5 736).

Bei Einsatz der bekannten Weichmacher stellt sich jedoch das Problem, spezielle Eigenschaftskombinationen der modifizierten Vinylchloridpolymerisate einzustellen, ohne komplexe Mischungen mehrerer Weichmacherkomponenten verwenden zu müssen bzw. daß sich spezifische geforderte Eigenschaftskombinationen überhaupt nicht erreichen lassen.

Es wurde nun gefunden, daß sich durch Abmischung von Vinylchloridpolymerisaten mit speziell aufgebauten Blockcopolymeren auf Basis cyclischer Carbonate und Lactone transparente thermoplastische Formmassen herstellen lassen, deren Eigenschaften (insbesondere Zugfestigkeit, Kältefestigkeit und Härte) durch die Zusammensetzung der Blockcopolymerkomponente eingestellt werden können. Die Mischungen besitzen weiterhin sehr gute thermoplastische Verarbeitbarkeit, hohe Thermo- und Alterungsstabilität, gute Beständigkeit gegen Öle und Fette sowie sehr geringe Anteile an flüchtigen und migrierenden Verunreinigungen.

Gegenstand der Erfindung sind transparente Vinylchloridpolymerisat-Formmassen, enthaltend ein Copolymer mit sequenzartigem Aufbau der idealisierten Formel (I)

$$(A - X - B)_n \quad (I)$$

mit n = 1 bis 20, vorzugsweise 1 bis 10, wobei A = Polymerisat eines cyclischen Carbonats der Formel (II) ("Block A")

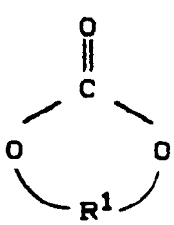

(II)

mit

$R^1 = -(CH_2)_n-$ mit n = 3-12,

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

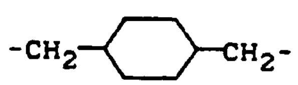 , 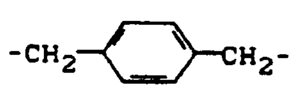 ,

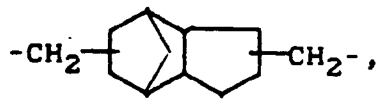

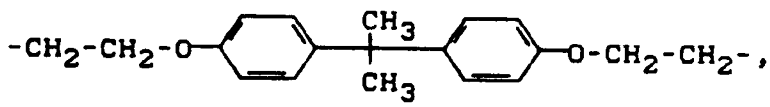

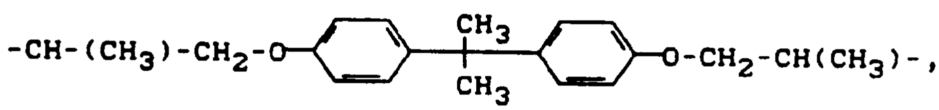

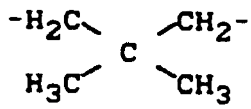 , 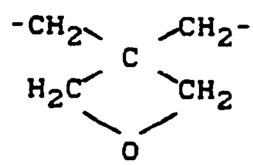 ,

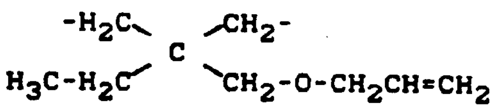 , 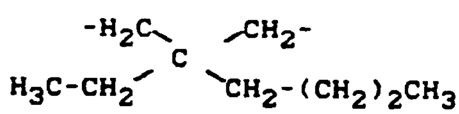

oder der Formel (III)

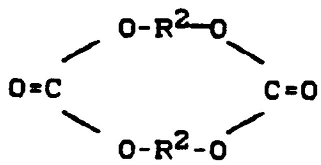 (III)

worin

$R^2 = -(CH_2)_n$ mit n = 4-12

$-CH_2CH_2OCH_2CH_2-$

$-CH_2CH_2OCH_2CH_2OCH_2CH_2-$

B = Polymerisat eines cyclischen Esters mit der Formel (IV) ("Block B")

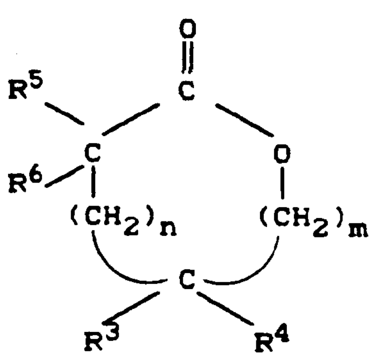 (IV)

mit

$R^3$, $R^4$, $R^5$, $R^6$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und

m, n unabhängig voneinander 0, 1, 2, 3, 4, 5 oder 6,

X = Mittelstück, enthaltend sowohl das cyclische Carbonat der Formel(II) und/oder (III) als auch den cyclischen Ester der Formel (IV) in polymerisierter Form, wobei die Konzentration der Struktureinheiten aus den Verbindungen (II) und/oder (III) in Richtung auf -B- und die Konzentration der Struktureinheiten aus den Verbindungen (IV) in Richtung auf -A-kontinuierlich abnimmt ("tapered structure") und wobei der Gehalt an Blöcken A 1 bis 99 Gew.-%, vorzugsweise 10 bis 90 Gew.-% (jeweils bezogen auf Gesamtmenge der Blöcke (A+B), der Gehalt an Blöcken B 99 bis 1 Gew.-%, vorzugsweise 90 bis 10 Gew.-% (jeweils bezogen auf Gesamtmenge der Blöcke A+B), und der Gehalt an Mittelstücken X 5 bis 95 Gew.-%, vorzugsweise 10 bis 80 Gew.-% (jeweils bezogen auf Gesamtmenge A+B+X) beträgt.

Bevorzugte erfindungsgemäße Formmassen bestehen aus

A) 20 bis 80 Gew.-%, bevorzugt 30 bis 75 Gew.-% und besonders bevorzugt 40 bis 70 Gew.-% Vinylchloridpolymerisat(en) und

B) 80 bis 20 Gew.-%, bevorzugt 70 bis 25 Gew.-% und besonders bevorzugt 60 bis 30 Gew.-% Copolymer(en) der oben angegebenen Formel (I).

Vinylchloridpolymerisate im Sinne der Erfindung sind insbesondere Polyvinylchlorid, vorzugsweise mit einem K-Wert von 30-100, und Copolymerisate des Vinylchlorids mit bis zu 50 Gew.-% copolymerisierbaren Vinylestern, Maleinsäureanhydrid oder Halbestern der Maleinsäure.

Die erfindungsgemäß geeigneten Vinylchloridpolymerisate können nach bekannten technischen Verfahren hergestellt werden, z.B. durch Emulsions-, Suspension- bzw. Massepolymerisation.

Blockartig aufgebaute Copolymerkomponenten im Sinne der Erfindung sind Copolymere mit sequenzartigem Aufbau der idealisierten Formel (I)

$$(A - X - B)_n \quad (I)$$

mit n = 1 bis 20, vorzugsweise 1 bis 10, wobei A = Polymerisat eines cyclischen Carbonats der Formel (II) ("Block A")

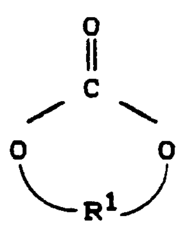

(II)

mit

$R^1$ = $-(CH_2)_n-$ mit n = 3-12,

$-CH_2CH_2CH(CH_3)-$,

$-CH_2CH_2OCH_2CH_2-$,

$-CH_2CH_2OCH_2CH_2OCH_2CH_2-$,

$-CH_2CH(CH_3)CH_2CH_2C(CH_3)_2CH_2-$,

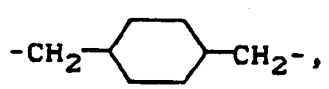

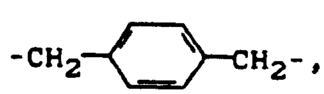

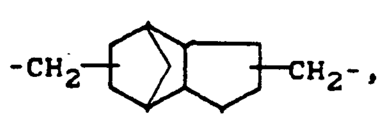

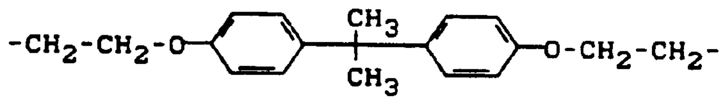,

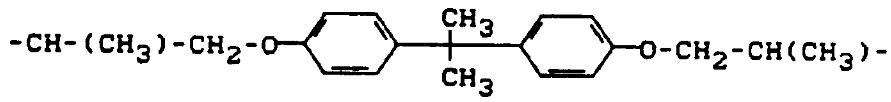,

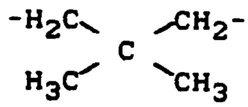,
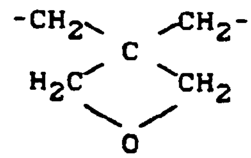,

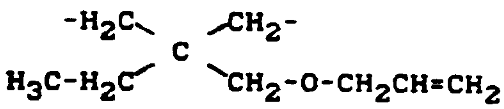,
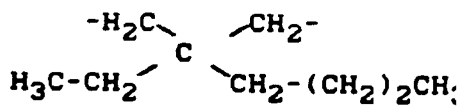;

oder der Formel (III)

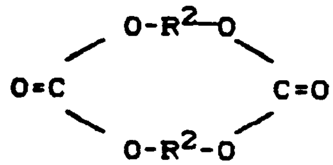
(III)

worin

$R^2 = -(CH_2)_n$ mit n = 4-12

$-CH_2CH_2OCH_2CH_2-$

$-CH_2CH_2OCH_2CH_2OCH_2CH_2-$

B = Polymerisat eines cyclischen Esters mit der Formel (IV) ("Block B")

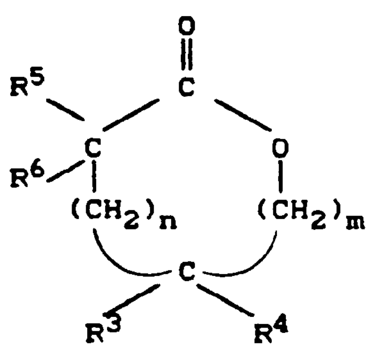
(IV)

mit

$R^3$, $R^4$, $R^5$, $R^6$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und

m, n unabhängig voneinander 0, 1, 2, 3, 4, 5 oder 6,

X = Mittelstück, enthaltend sowohl das cyclische Carbonat der Formel (II) und/oder (III) als auch den cyclischen

Ester der Formel (IV) in polymerisierter Form, wobei die Konzentration der Struktureinheiten aus den Verbindungen (II) und/oder (III) in Richtung auf -B- und die Konzentration der Struktureinheiten aus den Verbindungen (IV) in Richtung auf -A-kontinuierlich abnimmt ("tapered structure"), bedeutet.

Der Gehalt an Blöcken A beträgt dabei 1 bis 99 Gew.-%, vorzugsweise 10 bis 90 Gew.-% (jeweils bezogen auf Gesamtmenge der Blöcke A+B), der Gehalt an Blöcken B 99 bis 1 Gew.-%, vorzugsweise 90 bis 10 Gew.-% (jeweils bezogen auf Gesamtmenge der Blöcke A+B), und der Gehalt an Mittelstücken X 5 bis 95 Gew.-%, vorzugsweise 10 bis 80 Gew.-% (jeweils bezogen auf Gesamtmenge A+B+X).

Die mittleren Molekulargewichte der Blöcke A und B betragen größer 500 bis 1 000 000, vorzugsweise 1000 bis 500 000 und besonders bevorzugt 2000 bis 250 000; die mittleren Molekulargewichte der Mittelstücke X betragen 300 bis 20 000, vorzugsweise 500 bis 15 000.

Bevorzugte cyclische Carbonate (II) und (III) sind Trimethylenglykolcarbonat, Neopentylglykolcarbonat, 1,4-Butandiolcarbonat sowie dimere Carbonate des Pentandiols oder des Hexandiols. Besonders bevorzugt ist Neopentylglykolcarbonat. Bevorzugte Lactone (IV) sind ε-Caprolacton und Pivalolacton.

Die Copolymeren lassen sich aus den cyclischen Carbonaten und Estern durch anionische ringöffnende Lösungspolymerisation herstellen. Ein sequentieller Aufbau der Copolymeren wird durch eine stufenweise Zugabe der Carbonat/Ester-Mischung zur polymerisationsaktiven Lösung erreicht.

Bevorzugte Copolymere mit sequenzartigem Aufbau sind die gemäß DE-OS 37 00 193 erhaltenen Produkte mit Molekulargewichten $\overline{M}_w$ im Bereich von 2000 bis 500 000, bevorzugt 5000 bis 400 000.

Den erfindungsgemäßen Formmassen können nach Bedarf für Vinylchloridpolymerisate übliche Modifikatoren zugesetzt werden, um z.B. bestimmte mechanische Eigenschaften, die Wärmeformbeständigkeit usw. zu verbessern. Ferner können die für die PVC-Verarbeitung bekannten Additive wie z.B. Weichmacher, Fließhilfen, Flammschutzmittel, Stabilisatoren, Pigmente, Antistatika usw. zugesetzt werden.

Die Compoundierung der erfindungsgemäßen Formmassen kann auf den in der PVC-Technologie üblichen Mischaggregaten erfolgen. Die Formmassen können durch Walzen, Pressen, Extrudieren, Spritzgießen, Kalandrieren, Hohlkörperblasen, Tiefziehen, Sinterverfahren, wie z.B. slush-moulding und andere übliche Verfahren im Temperaturbereich von z.B. 150-220°C hergestellt bzw. verarbeitet werden.

Die erfindungsgemäßen Formmassen eignen sich beispielsweise zur Herstellung von Beschichtungen, Dichtungsmassen, Kabelmassen, Dämpfungsmassen und sonstigen Teilen mit hoher Flexibilität, z.B. Schläuchen, insbesondere aber zur Herstellung von Folien.

## Beispiele

### Eingesetzte Komponenten

#### Vinylpolymerisat - Komponente A

S - Polyvinylchlorid mit einem K-Wert von 70

#### Blockcopolymer - Komponente B

B 1: Blockcopolymerisat vom Typ A-X-B, wobei A Polyneopentylglykolcarbonat und B Poly-ε-Caprolacton darstellen. X bezeichnet ein "getapertes" Übergangssegment aus Neopentylglykolcarbonat und ε-Caprolacton. Das Copolymerisat wurde durch ringöffnende anionische Copolymerisation von Neopentylglykolcarbonat und ε-Caprolacton erhalten. Das Gewichtsverhältnis der Monomeren Neopentylglykolcarbonat und ε-Caprolacton im Copolymerisat beträgt 89:11 (ermittelt durch $^1$H-NMR-Spektroskopie). Die relative Lösungsviskosität $\eta_{rel}$ des Polymeren beträgt 3,87 (2 Gew.-%ige Lösung in $CH_2Cl_2$ bei 20°C).

B 2: wie B 1, Gewichtsverhältnis Neopentylglykolcarbonat: ε-Caprolacton = 62:38; $\eta_{rel}$ = 3,46 (2 Gew.-%ige Lösung in $CH_2Cl_2$ bei 20°C).

B 3: wie B 1, Gewichtsverhältnis Neopentylglykolcarbonat: ε-Caprolacton = 50:50; $\eta_{rel}$ = 5,77 (2 Gew.-%ige Lösung in $CH_2Cl_2$ bei 20°C).

B 4: wie B 1, Gewichtsverhältnis Neopentylglykolcarbonat: ε-Caprolacton = 33:67; $\eta_{rel}$ = 5,63 (2 Gew.-%ige Lösung in $CH_2Cl_2$ bei 20°C).

B 5: wie B 1, Gewichtsverhältnis Neopentylglykolcarbonat: ε-Caprolacton = 10:90; $\eta_{rel}$ = 2,71 (2 Gew.-%ige Lösung in $CH_2Cl_2$ bei 20°C).

#### Poly-ε-Caprolacton C (Vergleichssubstanz)

Polyε-Caprolacton wurde durch ringöffnende anionische Polymerisation von ε-Caprolacton in Toluol bei

15°C unter Verwendung von n-Butyllithium als Initiator, synthetisiert. Die relative Lösungsviskosität $\eta_{rel}$ beträgt 4,16 (2 Gew.-%ige Lösung in $CH_2Cl_2$ bei 20°C).

Die Compoundierung der Einsatzkomponenten erfolgte auf einer Walze bei 175°C innerhalb von 10 Minuten, wobei als Stabilisaztor 1,0 Gew.-Teile Irgastab 17 M (Ciba-Geigy) zugesetzt wurden. Danach wurde das gebildete Walzfell bei 180°C zu Platten verpreßt, aus denen die Prüfkörper entnommen wurden.

In Tabelle 1 sind die Zusammensetzungen sowie die resultierenden Prüfdaten zusammengestellt.

Die Prüfungen ergfolgten nach folgenden Normen:

| | | |
|---|---|---|
| Zugfestigkeit | (MPa) | DIN 53 455 |
| Dehnung | (%) | DIN 53 455 |
| Weiterreißfestigkeit | (MPa) | DIN 53 515 |
| Shore-Härte | | DIN 53 505 |
| Kältefestigkeit | (°C) | DIN 53 372 (Fallhammer-methode) |

**Tabelle 1** Zusammensetzungen und Prüfdaten der Formmassen

| Beispiel Nr. | A) Gew.-Teile | B 1) Gew.-Teile | B 2) Gew.-Teile | B) 3 Gew.-Teile | B 4) Gew.-Teile | B 5) Gew.-Teile | C) Gew.-Teile | Zugfestigkeit MPa | Dehnung | Weiterreißfestigkeit MPa | Shore-Härte A/D | Kältefestigkeit °C |
|---|---|---|---|---|---|---|---|---|---|---|---|---|
| 1. (erfindungsgemäß | 60 | 40 | -- | -- | -- | -- | -- | 36,7 | 225 | 120 | 99/72 | -8 |
| 2. (erfindungsgemäß | 60 | -- | 40 | -- | -- | -- | -- | 30,4 | 275 | 116 | 97/64 | -11 |
| 3. (erfindungsgemäß | 60 | -- | -- | 40 | -- | -- | -- | 29,0 | 326 | 111 | 98/56 | -13 |
| 4. (erfindungsgemäß | 60 | -- | -- | -- | 40 | -- | -- | 27,0 | 381 | 81 | 89/40 | -38 |
| 5. (erfindungsgemäß | 60 | -- | -- | -- | -- | 40 | -- | 18,9 | 332 | 66 | 78/25 | -43 |
| 6. (Vergleich) | 60 | -- | -- | -- | -- | -- | 40 | 19,4 | 385 | 61 | 77/25 | -33 |

## Patentansprüche

1. Transparente Vinylchloridpolymerisat-Formmassen, enthaltend ein Copolymer mit sequenzartigem Aufbau der idealisierten Formel (I)

$$(A - X - B)_n \quad (I)$$

mit
n = 1 bis 20, wobei A = Polymerisat eines cyclischen Carbonats der Formel (II) ("Block A")

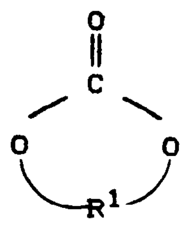

(II)

mit $-(CH_2)_n-$ mit n = 3-12,
$R^1$ = $-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

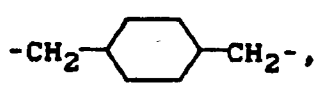

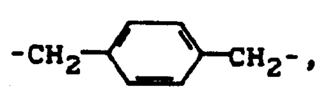

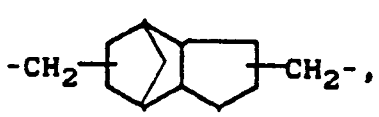

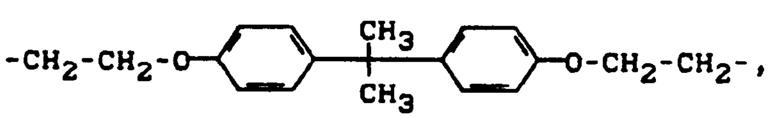

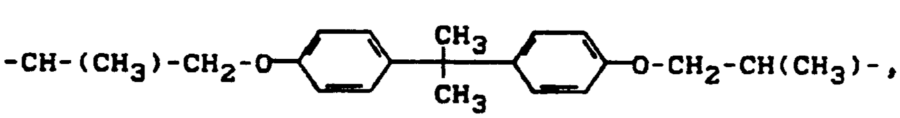

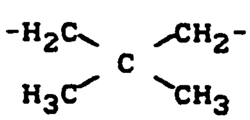

,

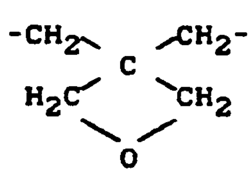

,

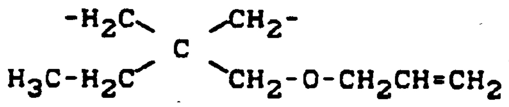, 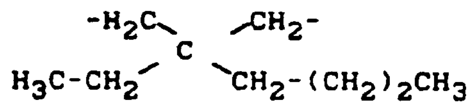

oder der Formel (III)

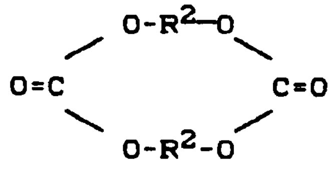 (III)

worin

$R^2$ = $-(CH_2)_n$ mit n = 4-12

$-CH_2CH_2OCH_2CH_2-$

$-CH_2CH_2OCH_2CH_2OCH_2CH_2-$

B= Polymerisat eines cyclischen Esters mit der Formel (IV) ("Block B")

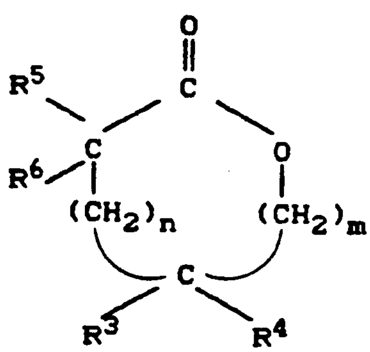 (IV)

mit

$R^3$, $R^4$, $R^5$, $R^6$ = H, $C_1$-$C_6$-Alkyl, $C_3$-$C_6$-Alkenyl, $C_1$-$C_6$-Alkoxy, $C_1$-$C_6$-Alkenoxy-$C_1$-$C_6$-alkyl, insbesondere H, $CH_3$, $C_2H_5$ und

m, n unabhängig voneinander 0, 1, 2, 3, 4, 5 oder 6,

X = Mittelstück, enthaltend sowohl das cyclische Carbonat der Formel (II) und/oder (III) als auch den cyclischen Ester der Formel (IV) in polymerisierter Form, wobei die Konzentration der Struktureinheiten aus den Verbindungen (II) und/oder (III) in Richtung auf -B- und die Konzentration der Struktureinheiten aus den Verbindungen (IV) in Richtung auf -A- kontinuierlich abnimmt ("tapered structure") und wobei der Gehalt an Blöcken A 1 bis 99 Gew.-%, (bezogen auf Gesamtmenge der Blöcke A+B), der Gehalt an Blöcken B 99 bis 1 Gew.-%, (bezogen auf Gesamtmenge der Blöcke A+B), und der Gehalt an Mittelstücken X 5 bis 95 Gew.-%, (bezogen auf Gesamtmenge A+B+X) beträgt.

2. Transparente Vinylchloridpolymerisat-Formmassen gemäß Anspruch 1 bestehend aus

A) 20 bis 80 Gew.-% Vinylchloridpolymerisat(en) und

B) 80 bis 20 Gew.-% Copolymer(en) der in Anspruch 1 angegeben Formel (I).

3. Formmassen gemäß Anspruch 1 und 2, dadurch gekennzeichnet, daß als Copolymerkomponente mit der in Anspruch A angegebenen Formel (I) ein durch anionische ringöffnende Polymerisation hergestelltes Polymerisat enthalten ist.

4. Formmassen gemäß Ansprüchen 1 bis 3, dadurch gekennzeichnet, daß als Copolymerkomponente mit der in Anspruch 1 angegebenen Formel (I) ein Copolymeres aus 1 bis 99 Gew.-% Neopentylglykolcarbonat und 99 bis 1 Gew.-% ε-Caprolacton enthalten ist.

5. Formmassen gemäß Ansprüchen 1 bis 4, dadurch gekennzeichnet, daßsie für Weiche-PVC-typische Anwendungen wie z.B. Folienmaterialien, Kabelmassen, Beschichtungen u.a. geeignet sind.

6. Formmassen gemäß Ansprüchen 1 bis 5, dadurch gekennzeichnet, daß sie sich zu Folien mit hoher Festigkeit und Dehnung über Kalanderprozesse und/oder Slush-moulding-Verfahren verarbeiten lassen.

## Claims

1. Transparent vinyl chloride polymer molding compounds containing a sequential copolymer having the following idealized formula

$$(A - X - B)_n \quad (I)$$

in which
n = 1 to 20, A is a polymer of a cyclic carbonate corresponding to the following formula ("block A")

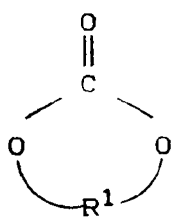

(II)

in which
$R^1$ = $-(CH_2)_n-$ with n = 3-12,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

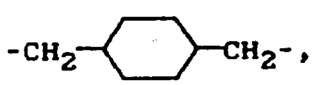, 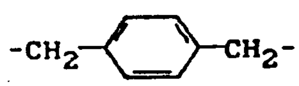,

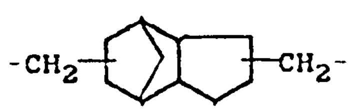,

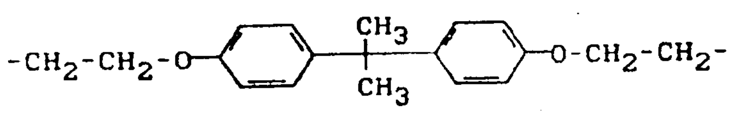,

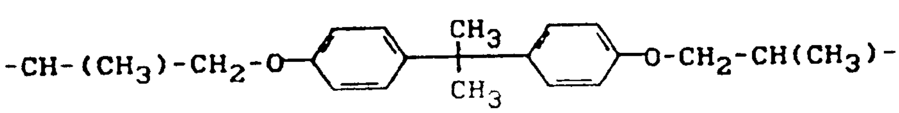,

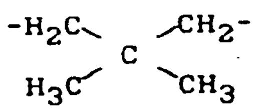, 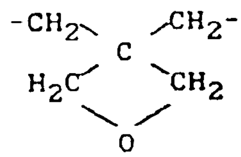,

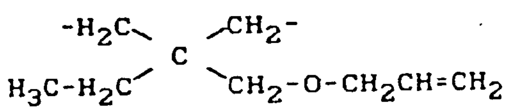 , 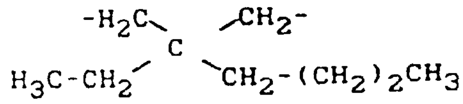

or to the following formula

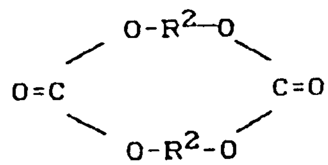 (III)

in which

$R^2 = -(CH_2)_n$ with n = 4-12

$- CH_2CH_2OCH_2CH_2-$

$- CH_2CH_2OCH_2CH_2OCH_2CH_2-$

B = polymer of a cyclic ester corresponding to the following formula ("block B")

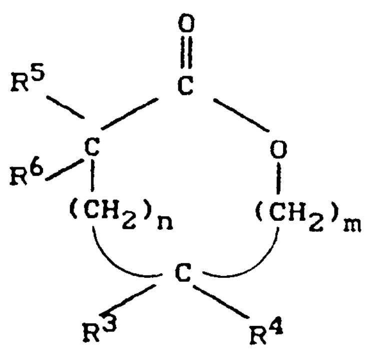 (IV)

in which

$R^3$, $R^4$, $R^5$, $R^6$ = H, $C_1$-$C_6$ alkyl, $C_3$-$C_6$ alkenyl, $C_1$-$C_6$ alkoxy, $C_1$-$C_6$-alkenoxy-$C_1$-$C_6$-alkyl, particularly H, $CH_3$, $C_2H_5$ and

m and n independently of one another = 0, 1, 2, 3, 4, 5 or 6,

X is a middle segment containing both the cyclic carbonate of the formula (II) and/or (III) and also the cyclic ester of formula (IV) in polymerized form, the concentration of the structural units of compounds (II) and/or (III) decreasing continuously towards -B- and the concentration of the structural units of compounds (IV) decreasing continuously towards -A- ("tapered structure") and the content of blocks A comprising 1 to 99% by weight (based on the total quantity of blocks A and B), the content of blocks B comprising 99 to 1% by weight (based on the total quantity of blocks A and B) and the content of middle segments X comprising 5 to 95% by weight (based on the total quantity of A+B+X).

2. Transparent vinyl chloride polymer molding compounds as claimed in claim 1 consisting of

A) 20 to 80% by weight vinyl chloride polymer(s) and

B) 80 to 20% by weight copolymer(s) corresponding to formula (I) in claim 1.

3. Molding compounds as claimed in claims 1 and 2, characterized in that a polymer produced by anionic ring-opening polymerization is present as the copolymer component corresponding to formula (I) in claim 1.

4. Molding compounds as claimed in claims 1 to 3, characterized in that a copolymer of 1 to 99% by weight neopentyl glycol carbonate and 99 to 1% by weight ε-caprolactone is present as the copolymer component corresponding to formula (I) in claim 1.

5. Molding compounds as claimed in claims 1 to 4, characterized in that they are suitable for applications typical of flexible PVC, such as for example film materials, cable insulating compounds, coatings, etc.

6. Molding compounds as claimed in claims 1 to 5, characterized in that they can be processed to films of high strength and elongation by calendering processes and/or slush molding processes.

## Revendications

1. Matières à mouler transparentes à base de polymère de chlorure de vinyle contenant un copolymère à structure séquencée de formule théorique (I) :

$$(A - X - B)_n \quad (I)$$

dans laquelle
n a une valeur de 1 à 20, A est un polymère d'un carbonate cyclique de formule (II) ("séquence A")

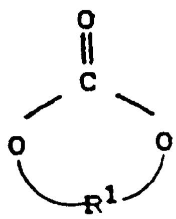 (II)

$R^1$ représente $-(CH_2)_n-$ avec n = 3-12,
$-CH_2CH_2CH(CH_3)-$,
$-CH_2CH_2OCH_2CH_2-$,
$-CH_2CH_2OCH_2CH_2OCH_2CH_2-$,
$-CH_2CH(CH_3)CH_2CH_2C(CH_3)_2CH_2-$,

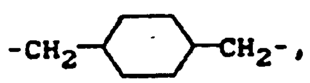 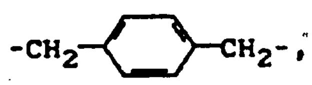

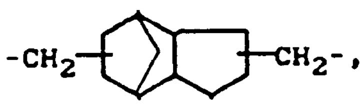

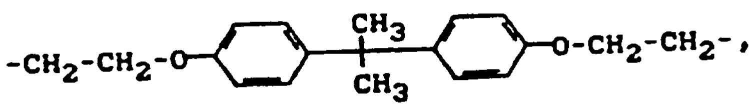

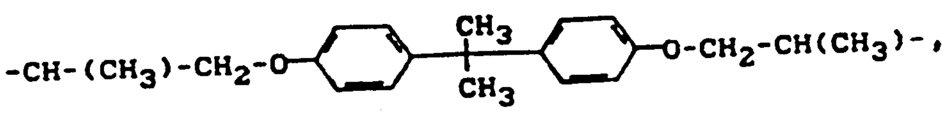

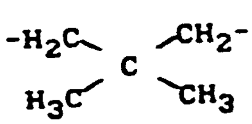 , 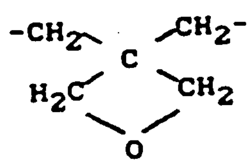 ,

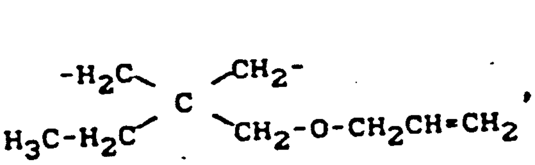 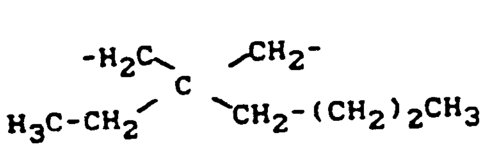

ou de formule (III)

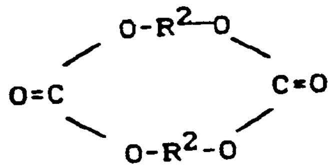

(III)

dans laquelle
$R^2$ représente $-(CH_2)_n$ avec n = 4-12
$-CH_2CH_2OCH_2CH_2-$
$-CH_2CH_2OCH_2CH_2OCH_2CH_2-$
B est un polymère d'un ester cyclique de formule (IV) ("séquence B")

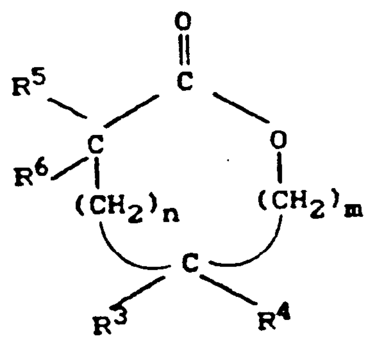

(IV)

où
$R^3$, $R^4$, $R^5$, $R^6$ représentent H, un groupe alkyle en $C_1$ à $C_6$, alcényle en $C_3$ à $C_6$, alkoxy en $C_1$ à $C_6$, (alcénoxy en $C_1$ à $C_6$)-(alkyle en $C_1$ à $C_6$), notamment H, $CH_3$, $C_2H_5$ et
m et n ont indépendamment l'un de l'autre la valeur 0, 1, 2, 3, 4, 5 ou 6,
X est une portion centrale contenant tant le carbonate cyclique de formule (II) et/ou (III) que l'ester cyclique de formule (IV) sous la forme polymérisée, la concentration des motifs structuraux des composés (II) et/ou (III) diminuant de façon continue dans la direction de -B- et la concentration des motifs structuraux des composés (IV) diminuant de façon continue dans la direction de -A- ("tapered structure") et la teneur en séquences A allant de 1 à 99 % en poids (par rapport à la quantité totale des séquences A+B), la teneur en séquences B allant de 99 à 1 % en poids (par rapport à la quantité totale des séquences A+B) et la teneur en portions centrales X allant de 5 à 95 % en poids (par rapport à la quantité totale A+B+X).

2. Matières à mouler transparentes à base de polymère de chlorure de vinyle suivant la revendication 1, constituées de

A) 20 à 80 % en poids d'un ou plusieurs polymères de chlorure de vinyle et

B) 80 à 20 % en poids d'un ou plusieurs copolymères de formule (I) indiquée dans la revendication 1.

3. Matières à mouler suivant les revendications 1 et 2, caractérisées en ce que le composant copolymère de formule (I) indiquée dans la revendication 1 est un polymère produit par polymérisation anionique avec ouverture du noyau.

4. Matières à mouler suivant les revendications 1 à 3, caractérisées en ce que le composant copolymère de formule (I) indiquée dans la revendication 1 est un copolymère de 1 à 99 % en poids de carbonate de néopentylglycol et de 99 à 1 % en poids d'ε-caprolactone.

5. Matières à mouler suivant les revendications 1 à 4, caractérisées en ce qu'elles conviennent pour des applications classiques de PVC souple, par exemple pour des matières en feuille, des matières pour câbles, des revêtements, etc.

6. Matières à mouler suivant les revendications 1 à 5, caractérisées en ce qu'elles peuvent être mises en oeuvre pour produire des feuilles très solides et extensibles par des procédés de calandrage et/ou par le procédé de slush-moulding.